# EUROPÄISCHE PATENTANMELDUNG

(11) **EP 3 263 839 A1**
(43) Veröffentlichungstag der Anmeldung: **03.01.2018**
(21) Anmeldenummer: 16176789.2
(22) Anmeldetag: 29.06.2016
(51) Int. Cl.: F01D 5/26, F01D 5/30

(54) **VERFAHREN ZUR OPTIMIERUNG EINES DESIGNS EINER LAUFSCHAUFEL SOWIE ZUGEHÖRIGE LAUFSCHAUFEL**

(71) Anmelder: Siemens Aktiengesellschaft, 80333 München (DE)
(72) Erfinder: Ahmad, Fathi, 41564 Kaarst (DE); Radulovic, Radan, 44799 Bochum (DE)

(57) **Zusammenfassung**

Die Erfindung betrifft Verfahren zur Optimierung eines Designs einer Laufschaufel (1), die einen Schaufelfuß (4) und ein Schaufelblatt (5) aufweist, einer Strömungsmaschine, bei dem eine Ist-Eigenfrequenz der Laufschaufel (1) erfasst, die erfasste Ist-Eigenfrequenz mit einem Referenzwert oder Referenzbereich verglichen und, wenn eine die bestimmungsgemäße Verwendung der Laufschaufel (1) beeinträchtigende Abweichung oder Übereinstimmung zwischen der Ist-Eigenfrequenz und dem Referenzwert oder Referenzbereich festgestellt wird, eine bauliche Veränderung an der Laufschaufel (1) zur Änderung deren Eigenfrequenz vorgenommen wird, wobei als bauliche Veränderung zumindest eine Aussparung (9; 15) an einer vorbestimmten Position an zumindest einer Seitenfläche (2) des Laufschaufelfußes (4) ausgebildet wird. Ferner betrifft die Erfindung eine Laufschaufel (1) für eine Strömungsmaschine, die einen Schaufelfuß (4) und ein Schaufelblatt (5) aufweist, wobei zumindest eine Aussparung (9; 15) an zumindest einer Seitenfläche (2) des Laufschaufelfußes (4) ausgebildet ist.

## Beschreibung

Die vorliegende Erfindung betrifft ein Verfahren zur Optimierung eines Designs einer Laufschaufel, die einen Schaufelfuß und ein Schaufelblatt aufweist, bei dem eine Ist-Eigenfrequenz der Laufschaufel erfasst, die erfasste Ist-Eigenfrequenz mit einem Referenzwert oder Referenzbereich verglichen und, wenn eine die bestimmungsgemäße Verwendung der Laufschaufel beeinträchtigende Abweichung oder Übereinstimmung zwischen der Ist-Eigenfrequenz und dem Referenzwert oder Referenzbereich festgestellt wird, eine bauliche Veränderung an der Laufschaufel zur Änderung deren Eigenfrequenz vorgenommen wird. Ferner bezieht sich die Erfindung auf eine Laufschaufel, die einen Schaufelfuß und ein Schaufelblatt aufweist.

Strömungsmaschinen, wie zum Beispiel Gasturbinen, weisen zumindest einen Laufschaufelkranz mit mehreren Laufschaufeln auf, der an einem Läufer angeordnet ist und zusammen mit diesem rotiert. Bei jeder dieser Laufschaufeln handelt es sich um ein schwingungsfähiges System das während des Betriebs der Strömungsmaschine zu Schwingungen angeregt wird, wobei jede Laufschaufel grundsätzlich bei ihren Eigenfrequenzen schwingt. Stimmen in Abhängigkeit von der Drehzahl des Läufers der Strömungsmaschine ganzzahlige Vielfache der Rotationsfrequenz mit einer Eigenfrequenz einer Laufschaufel überein, so treten Resonanzschwingungen auf, die bei schwacher Dämpfung eine besonders hohe Amplitude aufweisen. Schwingt eine Laufschaufel in Resonanz, so führen die damit verbundenen mechanischen Beanspruchungen zu Beschädigungen der Komponenten der Strömungsmaschine und zu einer verringerten Lebensdauer der betroffenen Komponenten. Daher ist es wichtig, solche Resonanzen, insbesondere Resonanzen mit sogenannter Burner- oder Vane-Erregung, zu vermeiden. Eine Eigenfrequenzanalyse einer Laufschaufel wird normalerweise am Ende eines Herstellungsprozesses durchgeführt, da sich aufgrund von Fertigungstoleranzen und Fertigungsungenauigkeiten, beispielsweise Abweichungen in der Wandstärke der Laufschaufeln, Frequenzänderungen ergeben. Eine Vorhersage der Eigenfrequenz einer Laufschaufel zu einem früheren Zeitpunkt ist entsprechend kaum möglich.

Für den Fall, dass im Rahmen einer Eigenfrequenzanalyse eine erfasste Eigenfrequenz einer Laufschaufel in einem kritischen Resonanzbereich liegt, ist es bekannt deren Eigenfrequenz zu verändern. In diesem Zusammenhang schlägt die DE 10 2009 053 247 A1 vor, einen Werkstoff mittels eines additiven Fertigungsverfahrens auf einen Oberflächenbereich der Laufschaufel aufzubringen, wodurch die Massenverteilung der Laufschaufel und somit deren Schwingungsfrequenz geändert wird. Nach der DE 10 2009 053 247 A1 wird insbesondere die Spitze des Schaufelblattes mit einer zusätzlichen Beschichtung versehen. Es ist also bekannt, als bauliche Veränderung der Laufschaufel deren Wandstärke durch Aufbringen einer Beschichtung zu erhöhen. Mit dieser Maßnahme sind jedoch nur geringfügige Frequenzänderungen im Bereich weniger Hz erzielbar, weshalb eine Verschiebung der Eigenfrequenz aus dem Resonanzbereich nicht immer möglich ist. Das Erhöhen der Beschichtungsdicke einer Laufschaufel stellt somit keine robuste und zuverlässige Eigenfrequenzkorrekturmaßnahme dar, was im Zweifel dazu führt, dass neu hergestellte Laufschaufeln als Ausschuss zu deklarieren sind. Zudem verursacht ein Erhöhen der Schichtdicke andere Probleme, da die Dicken funktionaler Beschichtungen beim ursprünglichen Design der Laufschaufel bewusst gewählt werden. So kann sich eine Veränderung der Schichtdicke beispielsweise negativ auf die thermische Belastbarkeit der Laufschaufel auswirken.

Vor diesem Hintergrund liegt der vorliegenden Erfindung die Aufgabe zugrunde, ein Verfahren zur Optimierung eines Designs einer Laufschaufel für eine Strömungsmaschine bereitzustellen, das es ermöglicht, eine Eigenfrequenz der Laufschaufel zuverlässig zu verändern, so dass diese klar außerhalb eines kritischen Frequenzbereichs liegt. Des Weiteren soll eine Laufschaufel mit einem in diesem Sinne optimierten Design angegeben werden.

Zur Lösung dieser Aufgabe schafft die vorliegende Erfindung ein Verfahren der eingangs genannten Art, das dadurch gekennzeichnet ist, dass als bauliche Veränderung zumindest eine Aussparung an einer vorbestimmten Position an zumindest einer Seitenfläche des Laufschaufelfußes ausgebildet wird.

Vor dem Hintergrund, dass die Befestigung des Laufschaufelfußes in einer am Läufer vorgesehenen Schaufelfußaufnahme die Schwingungsfrequenz der Laufschaufel während des Betriebs einer Strömungsmaschine maßgeblich beeinflusst, wird durch die erfindungsgemäße Ausbildung zumindest einer Aussparung die Kontaktfläche zwischen dem Laufschaufelfuß und der Schaufelfußaufnahme gezielt verringert, um auf diese Weise die Schwingungsfrequenz der Laufschaufel zu beeinflussen. Diese Vorgehensweise stellt insbesondere deshalb eine gute Stellschraube für eine zuverlässige Veränderung einer Eigenfrequenz der Laufschaufel dar, da sich die Eigenfrequenz der Laufschaufel in vergleichsweise großem Maße variieren lässt. Darüber hinaus wird das übrige Design der Laufschaufel nicht beeinträchtigt, weshalb das erfindungsgemäße Verfahren keine Folgeprobleme verursacht. Ferner lässt es sich einfach und preiswert durchführen.

Gemäß einer Ausgestaltung der Erfindung wird die Laufschaufel zur Erfassung der Ist-Eigenfrequenz mit ihrem Laufschaufelfuß in eine Schaufelfußaufnahme einer Erregungsvorrichtung eines Schwingungsmessstandes eingefügt, so dass sich Oberflächen des Schaufelfußes und der Schaufelfußaufnahme kontaktieren. Daraufhin wird eine Schwingung in der Laufschaufel erregt und die angeregte Schwingung der Laufschaufel gemessen. Insbesondere weist die Schaufelfußaufnahme des Schwingungsmessstandes innerhalb bestimmter Fertigungstoleranzen dieselbe Geometrie wie eine im Läufer ausgebildete reale Schaufelfußaufnahme für die Laufschaufel auf. Somit ist es möglich, mit wenig Aufwand Frequenzmessungen an der Laufschaufel vorzunehmen. Die erfasste Ist-Eigenfrequenz ermöglicht es zu beurteilen, ob bauliche Veränderungen in Form einer Ausbildung von zumindest einer Aussparung am Laufschaufelfuß vorgenommen werden müssen.

Ist die Veränderung der Eigenfrequenz einer Laufschaufel erforderlich, so wird die vorbestimmte Position der zumindest einen Aussparung bevorzugt bestimmt, indem eine Platte mit zumindest einem Loch, insbesondere zumindest einem kreisförmigen Loch, bevorzugt einem Lochmuster, zwischen einer Seitenfläche des Schaufelfußes und der Schaufelfußaufnahme der Erregungsvorrichtung des Schwingungsmessstandes angeordnet wird. Daraufhin wird die aufgrund des zumindest einen Lochs veränderte Eigenfrequenz der Laufschaufel erneut erfasst und mit dem Referenzwert oder Referenzbereich verglichen. Ist das Ergebnis zufriedenstellend, so wurde die vorbestimmte Position ausfindig gemacht. Andernfalls wird der Vorgang mit variierenden Lochabmessungen und/oder Lochpositionen solange wiederholt, bis sich ein zufriedenstellendes Ergebnis einstellt.

Vorteilhaft ist die Platte eine dünne Platte, insbesondere in Form einer länglichen Schiene, insbesondere aus Metall, bevorzugt mit einer Dicke zwischen 0,1 und 2 mm, die lösbar, insbesondere mittels Kleben, auf der Seitenfläche des Schaufelfußes befestigt wird. Eine dünne Platte bietet den Vorteil, dass sie problemlos zwischen der Seitenfläche des Schaufelfußes und der Schaufelfußaufnahme angeordnet werden kann. Da die dünne Platte auf einer länglichen Seitenfläche des Laufschaufelfußes befestigt wird, ist eine längliche Form besonders vorteilhaft. Eine Befestigung der dünnen Platte an einer Seitenfläche mittels einer wieder lösbaren Klebeverbindung bietet den Vorteil, dass die dünne Platte nach ihrer Verwendung wieder entfernt werden kann. Besonders vorteilhaft ist die Verwendung einer Metallplatte, da diese ähnliche mechanische und thermische Eigenschaften wie die Laufschaufel aufweist. Je nach Anbringung der dünnen Platte an der Seitenfläche der Laufschaufel kann es auch von Vorteil sein, wenn die dünne Platte leicht flexibel und biegsam ausgebildet ist.

Vorzugsweise wird die dünne Platte so lange an unterschiedlichen Positionen zwischen der Seitenfläche des Laufschaufelfußes und der Schaufelfußaufnahme angeordnet oder durch andere dünne Platten mit unterschiedlichen Lochanordnungen ausgetauscht, bis keine die bestimmungsgemäße Verwendung der Laufschaufel beeinträchtigende Abweichung oder Übereinstimmung zwischen der zuletzt erfassten Eigenfrequenz und dem Referenzwert oder Referenzbereich mehr festgestellt wird. Sodann wird die zumindest eine Aussparung an der Position des zumindest einen Lochs ausgebildet. Hierfür kann die Platte als Schablone zur Markierung der vorbestimmten Position dienen.

Bevorzugt wird die zumindest eine Aussparung durch Entfernen einer geringen Menge von Schaufelmaterial, insbesondere durch Erodieren, Bohren, Fräsen, Schleifen, "Smooth Blending" und/oder anderen Verfahren zur Materialabtragung, derart ausgebildet, dass bei einer bestimmungsgemäßen Verwendung der Laufschaufel ein Kontakt zwischen dem Schaufelfuß und einer Schaufelfußaufnahme gerade verhindert wird. Das Bohren von Löchern in die Seitenfläche des Laufschaufelfußes ist hierbei besonders vorteilhaft, da es schnell, einfach und kostengünstig ist. Bei der "Smooth Blending"-Technik sind Übergänge nicht eckig, sondern "smooth", also beispielsweise abgerundet.

Nach erfolgter Ausbildung der zumindest einen Aussparung kann die verwendete Lochplatte oder können die verwendeten Lochplatten für eine andere Laufschaufel erneut verwendet werden. Dies spart Kosten und Ressourcen.

Alternativ wird die Platte, die insbesondere eine längliche Form aufweist, derart in eine an der Seitenfläche des Schaufelfußes vorgesehenen Vertiefung, insbesondere eine Nut, eingelegt, dass die Platte mit der Seitenfläche des Schaufelfußes bündig abschließt. Ein bündiger Abschluss wird bevorzugt, da sich hierdurch der Schaufelfuß problemlos in eine entsprechende Schaufelfußaufnahme einfügen lässt. Trotzdem sollte klar sein, dass es grundsätzlich auch möglich ist, dass die Platte vergleichbar mit der zuvor beschriebenen dünnen Platte geringfügig von der Seitenfläche des Schaufelfußes vorsteht. Länge und Breite der Vertiefung stimmen bevorzugt mit denen der Platte überein, so dass die Platte die Vertiefung vollständig ausfüllt.

Die Vertiefung kann bereits während der Herstellung der Laufschaufel ausgebildet werden, beispielsweise während des Gießprozesses, wobei nach der Herstellung der Laufschaufel deren Ist-Eigenfrequenz zunächst bei einer in die Vertiefung eingefügten lochfreien Referenzplatte erfasst wird, oder die Vertiefung kann erst dann in die Seitenfläche des Schaufelfußes eingebracht werden, wenn eine Abweichung oder Übereinstimmung zwischen der Ist-Eigenfrequenz und dem Referenzwert oder Referenzbereich festgestellt wird. Das Ausbilden der Vertiefung während der Herstellung der Laufschaufel bietet den Vorteil, dass die Laufschaufel für alle Fälle bereits mit einer Vertiefung versehen ist, auch wenn eine Veränderung einer Eigenfrequenz zunächst nicht nötig ist, aber gegebenenfalls während des Betriebs notwendig wird. Dahingegen ist es auch durchaus vorteilhaft, wenn die Vertiefung erst bei Bedarf eingebracht wird, da die Stabilität der Laufschaufel nicht durch Kerbwirkung oder dergleichen beeinträchtigt wird.

Vorteilhafterweise werden so lange Platten mit unterschiedlichen Lochanordnungen in die Vertiefung des Schaufelfußes eingefügt, bis keine die bestimmungsgemäße Verwendung der Laufschaufel beeinträchtigende Abweichung oder Übereinstimmung zwischen der zuletzt erfassten Eigenfrequenz und dem Referenzwert oder Referenzbereich mehr festgestellt wird. Dann verbleibt die Platte unverändert und dauerhaft als Bestandteil der Laufschaufel in deren Vertiefung, so dass das zumindest eine Loch der Platte die zumindest eine Aussparung ausbildet.

Zur Lösung der eingangs genannten Aufgabe schafft die vorliegende Erfindung ferner eine Laufschaufel der eingangs genannten Art, die dadurch gekennzeichnet ist, dass zumindest eine Aussparung an zumindest einer derjenigen Seitenflächen des Laufschaufelfußes ausgebildet ist, an der die Laufschaufel bei bestimmungsgemäßer Benutzung in einer Strömungsmaschine während des Betriebes unter Fliehkraft an den Tragflanken der Schaufelfußaufnahme des Rotors anliegt.

Mit anderen Worten: Die Aussparung befindet sich an derjenigen Seitenfläche des Laufschaufelfußes, welche unter Fliehkraft flächig an den Rotor gepresst wird. Die Ausbildung der zumindest einen Aussparung kann insbesondere mittels des zuvor beschriebenen erfindungsgemäßen Verfahrens erfolgt sein. Die Vorteile einer solchen Aussparung wurden zuvor bereits ausführlich beschrieben, weshalb hierauf an dieser Stelle nicht erneut eingegangen wird.

Bevorzugt ist die zumindest eine Aussparung in Form eines Bohrlochs mit kreisrundem Querschnitt ausgebildet. Eine solche Aussparung ist besonders vorteilhaft, da sie durch Bohren schnell und leicht ausgebildet werden kann. Es sollte jedoch klar sein, dass die Aussparung grundsätzlich auch jede beliebige andere Querschnittsform, wie etwa quadratisch, rechteckig, oval oder allgemein polygonförmig, aufweisen kann. Vorteilhaft kann auch sein, wenn die zumindest eine Aussparung abgerundete Übergänge aufweist.

Gemäß einer Ausgestaltung der vorliegenden Erfindung ist an der Oberfläche des Schaufelfußes eine Vertiefung, insbesondere eine längliche Nut, ausgebildet, in der eine korrespondierende Platte, insbesondere eine längliche Schiene, bevorzugt aus Metall, in einer vorgegebenen Position befestigt ist, wobei die Platte mit der Oberfläche des Schaufelfußes insbesondere bündig abschließt und die zumindest eine Aussparung, insbesondere in Form einer Sackbohrung oder einer Durchgangsbohrung, in der Platte ausgebildet ist. Besonders vorteilhaft ist es, wenn die Länge der Platte der Länge der Vertiefung entspricht, so dass die Platte die Vertiefung vollständig ausfüllt. Die Befestigung der Platte in der Vertiefung erfolgt bevorzugt mittels Kleben, Löten oder Schweißen. Es sollte jedoch klar sein, dass die Befestigung grundsätzlich auch mittels anderer Verfahren, wie etwa Klemmen, Rasten und/oder Nieten, erfolgen kann. Obwohl ein bündiger Abschluss bevorzugt wird, da sich hierdurch der Schaufelfuß problemlos in eine Schaufelfußaufnahme einfügen lässt, ist es auch möglich, dass die Platte geringfügig über die Oberfläche des Laufschaufelfußes vorsteht. Sowohl die Vertiefung als auch die Platte können grundsätzlich jede beliebige Form aufweisen, wie etwa eine rechteckige, quadratische, ovale oder polygonale Querschnittsform. Gleiches gilt für die Aussparung, wobei hier eine kreisrunde Bohrung bevorzugt wird, da sie einfach, schnell und preiswert hergestellt werden kann.

Vorzugsweise erstreckt sich die Vertiefung über etwa 90% einer Seitenfläche des Schaufelfußes oder über die komplette Länge der Seitenfläche und in die beiden Stirnflächen des Schaufelfußes hinein. In dem Fall, dass sich die Vertiefung über etwa 90% einer Seitenfläche erstreckt, ist es besonders vorteilhaft, wenn sich die Vertiefung in keine der beiden Stirnflächen hinein erstreckt. Hierdurch ist keine zusätzliche Befestigung gegen eine Translation der Platte in der Vertiefung nötig.

Bezüglich weiterer möglicher Merkmale, technischer Wirkungen und Vorteile der erfindungsgemäßen Laufschaufel wird auf die vorstehende Beschreibung des erfindungsgemäßen Verfahrens verwiesen.

Weitere Merkmale und Vorteile der vorliegenden Erfindung werden anhand der nachfolgenden Beschreibung zweier Ausführungsformen eines Verfahrens zur Optimierung eines Designs einer einen Schaufelfuß aufweisenden Laufschaufel gemäß der vorliegenden Erfindung unter Bezugnahme auf die beiliegende Zeichnung deutlich. Darin ist
- Figur 1: eine schematische Vorderansicht einer Laufschaufel während der Durchführung eines ersten Schrittes eines Verfahrens gemäß einer Ausführungsform der vorliegenden Erfindung;
- Figur 2: eine perspektivische schematische Ansicht eines Schaufelfußes der in Figur 1 dargestellten Laufschaufel während der Durchführung eines zweiten Verfahrensschrittes;
- Figur 3: eine perspektivische schematische Ansicht eines Schaufelfußes der in Figur 1 dargestellten Laufschaufel während der Durchführung eines dritten Verfahrensschrittes;
- Figur 4: eine perspektivische schematische Ansicht eines Schaufelfußes der in Figur 1 dargestellten Laufschaufel während der Durchführung eines vierten Verfahrensschrittes;
- Figur 5: eine perspektivische schematische Ansicht eines Schaufelfußes der in Figur 1 dargestellten Laufschaufel nach der Durchführung eines fünften Verfahrensschrittes;
- Figur 6: eine perspektivische schematische Ansicht einer Laufschaufel während der Durchführung eines zweiten Schrittes eines Verfahrens gemäß einer zweiten Ausführungsform der vorliegenden Erfindung;
- Figur 7: eine perspektivische schematische Ansicht eines Schaufelfußes der in Figur 6 dargestellten Laufschaufel während der Durchführung eines dritten Verfahrensschrittes; und
- Figur 8: eine perspektivische schematische Ansicht eines Schaufelfußes der in Figur 6 dargestellten Laufschaufel nach der Durchführung eines vierten Verfahrensschrittes.

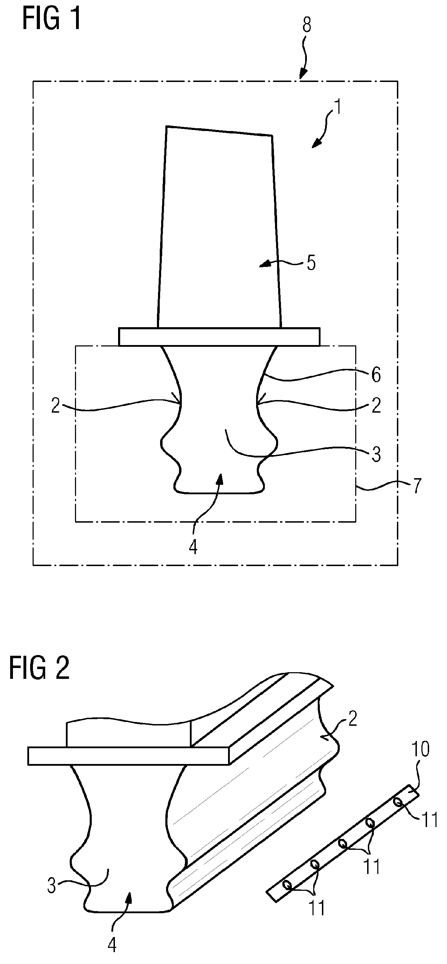

Die Figuren 1 bis 5 zeigen eine Laufschaufel 1 mit einem Seitenflächen 2 und Stirnflächen 3 definierenden Schaufelfuß 4 und einem Schaufelblatt 5 während fünf aufeinander folgenden Schritten eines Verfahrens gemäß einer ersten Ausführungsform der vorliegenden Erfindung, das zur Optimierung des Designs der Laufschaufel 1 durchgeführt wird.

Der Schaufelfuß 4 ist in der Regel tannbaumförmig oder schwalbenschwanzförmig ausgestaltet, so dass dessen Stirnseite 4 eben ist. Die in den Figuren gezeigte Laufschaufel 1 ist beispielsweise dafür vorgesehen, in einen Rotor mit Axialnuten eingesetzt zu werden. Wenn nachfolgend von der Seitenfläche 2 des Schaufelfußes die Rede ist, dann sind diejenigen Bereiche darunter verstanden, die die beiden gegenüberliegenden, ebenen Stirnflächen 3 miteinander verbinden und die bei bestimmungsgemäßen Einsatz der Laufschaufel in einer Turbine oder in einen Kompressor im Betrieb unter Fliehkraft an Wänden einer Schaufelhaltenut des Rotors anliegen.

Gemäß Figur 1 wird in einem ersten Schritt zunächst eine Ist-Eigenfrequenz der Laufschaufel 1 erfasst. Hierzu wird die Laufschaufel mit ihrem Schaufelfuß 4 in eine Schaufelfußaufnahme 5 einer Erregungsvorrichtung 6 eines Schwingungsmessstandes 7 derart eingesetzt, so dass die Seitenflächen 2 des Schaufelfußes 2 und die Oberflächen der Schaufelfußaufnahme 6 einander kontaktieren. Daraufhin wird die Laufschaufel 1 zu Schwingungen angeregt, woraufhin eine Ist-Eigenfrequenz der Laufschaufel 1 erfasst wird. Hierbei simuliert die Schaufelfußaufnahme 6 der Erregungsvorrichtung 7 die Schaufelfußaufnahmenut eines Läufers derjenigen Strömungsmaschine, in der die Laufschaufel 1 später verbaut werden soll. Die erfasste Ist-Eigenfrequenz wird anschließend mit einem akzeptablen, vorab ermittelten Referenzbereich verglichen. Wird eine die bestimmungsgemäße Verwendung der Laufschaufel 1 beeinträchtigende Abweichung zwischen der Ist-Eigenfrequenz und dem akzeptablen Referenzbereich festgestellt, so wird eine bauliche Veränderung an der Laufschaufel 1 erfindungsgemäß dergestalt vorgenommen, dass in einer der Seitenflächen 2 des Schaufelfußes 4 an zumindest einer vorbestimmten Position eine Aussparung 9 ausgebildet wird, um die Ist-Eigenfrequenz in gewünschtem Maße zu verändern.

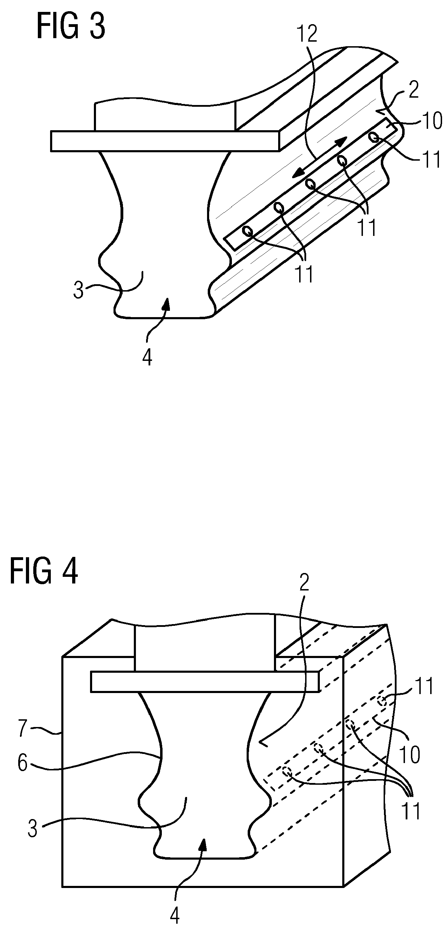

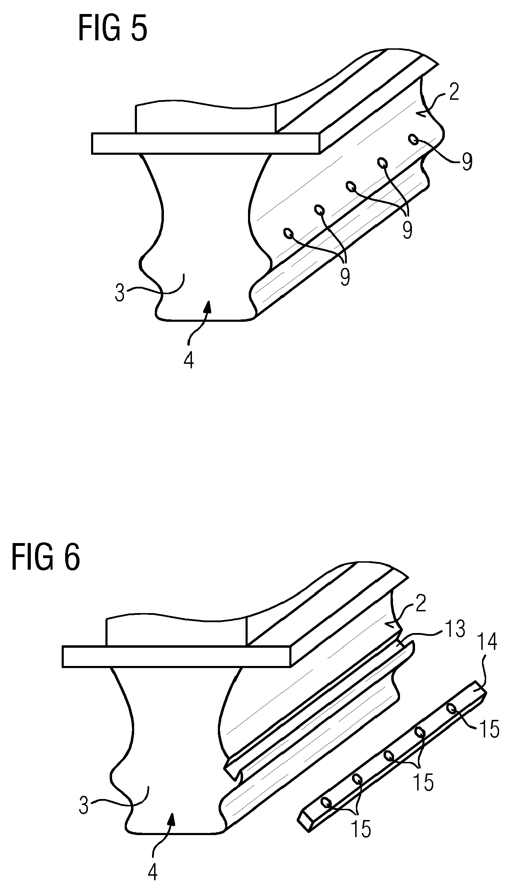

Gemäß einer ersten Ausführungsform eines erfindungsgemäßen Verfahrens werden in diesem Zusammenhang gemäß den Figuren 2 und 3 zunächst die vorbestimmten Positionen ermittelt, an denen Aussparungen 9 auszubilden sind, um die gewünschte Veränderung der Eigenfrequenz der Laufschaufel 1 zu bewirken. In diesem Zusammenhang wird eine dünne, etwa 0,5 mm dicke, länglich ausgebildete und aus Metall hergestellte Platte 10, die mit mehreren Löchern 11 versehen ist, an einer Seitenfläche 2 des Schaufelfußes 4 lösbar befestigt, beispielsweise mittels Kleben, woraufhin der Schaufelfuß 4 gemäß Figur 4 erneut in die Schaufelfußaufnahme 6 der Erregungsvorrichtung 7 eingesetzt und die neue Eigenfrequenz der Laufschaufel 1 mit der daran gehaltenen Platte 10 bestimmt wird. Die neue Eigenfrequenz stimmt nicht mit der ursprünglichen Eigenfrequenz überein, da die Löcher 11 der Platte 10 im Kontaktbereich zwischen dem Schaufelfuß 4 und der Schaufelfußaufnahme 6 die Eigenfrequenz beeinflussende Fehlstellen oder Nichtkontaktflächen bilden. Liegt die neue Eigenfrequenz weiterhin außerhalb des akzeptablen Referenzbereiches, so werden die in den Figuren 2 bis 4 dargestellten Verfahrensschritte unter Verschiebung der Platte 10 in Richtung des Doppelpfeils 12 so lange wiederholt, bis sich eine gewünschte Eigenfrequenz einstellt. Sollte dies nicht der Fall sein, so kann eine weitere Platte 10 mit anderem Lochmuster verwendet werden. Sobald die Eigenfrequenz innerhalb des akzeptablen Referenzbereiches liegt, werden die vorbestimmten Positionen, an denen sich die Aussparungen 9 befinden, unter Verwendung der Platte 10 als Schablone markiert, woraufhin die Platte 10 vom Schaufelfuß 4 entfernt wird. Daraufhin werden in einem letzten Schritt an den vorbestimmten Positionen bevorzugt flache Aussparungen 9 an der Seitenfläche 2 des Schaufelfußes 4 bei geringem Materialabtrag ausgebildet, beispielsweise mittels Bohren, Fräsen, "Smooth Blending" oder dergleichen, so dass sich die in Figur 5 dargestellte Anordnung ergibt. Diese Aussparungen 9 bilden während des bestimmungsgemäßen Einsatzes der Laufschaufel 1 in einer Strömungsmaschine Nichtkontaktstellen zwischen den Seitenflächen 2 des Schaufelfußes 4 und einer Schaufelfußaufnahme der Strömungsmaschine, die zu einer analogen Eigenfrequenz der Laufschaufel 1 führen, die außerhalb des Resonanzbereiches liegt.

Es sollte klar sein, dass die Form und Abmessungen der Platte 10 ebenso wie die Form, die Abmessungen und die Anzahl der Aussparungen 9 variieren kann. Auch können in den in den Figuren 2 bis 4 dargestellten Schritten mehrere Platten 10 an dem Schaufelfuß 4 angeordnet werden, beispielsweise an beiden Seitenflächen 2 des Schaufelfußes 4.

Die Figuren 6 bis 8 zeigen Verfahrensschritte eines alternativen Verfahrens gemäß einer Ausführungsform der vorliegenden Erfindung. Bei diesem Verfahren wird in einem ersten Verfahrensschritt analog zu Figur 1 die Ist-Eigenfrequenz der Laufschaufel 1 bestimmt. Liegt diese nicht innerhalb des akzeptablen Referenzbereiches, so werden in einem zweiten Schritt analog zum zuvor beschriebenen Verfahren vorbestimmte Positionen ermittelt, an denen an einer Seitenfläche 2 des Schaufelfußes 4 der Laufschaufel 1 Aussparungen 9 vorzusehen sind, um die Eigenfrequenz der Laufschaufel 1 in den akzeptablen Referenzbereich zu verschieben.

Hierzu wird, wie es in Figur 5 dargestellt ist, eine vorliegend nutförmige Vertiefung 13 in einer Seitenfläche 2 des Schaufelfußes 4 ausgebildet, beispielsweise mittels Fräsen oder dergleichen, die sich vorliegend geradlinig von einer Stirnfläche 3 zur gegenüberliegenden Stirnfläche 3 des Schaufelfußes 4 erstreckt. Alternativ kann sich die Vertiefung 13 auch über etwa 90% der Seitenfläche 2 und insbesondere in keine der beiden Stirnflächen 3 hinein erstrecken. Anschließend wird eine Platte 14, die mit mehreren Löchern 15 versehen ist, in die Vertiefung 13 derart eingesetzt, dass die Löcher 15 auswärts weisen. Die Abmessungen der Platte 14 entsprechen im Wesentlichen denjenigen der Vertiefung 13, wobei die Oberseite der Platte 14 im in die Vertiefung 13 eingesetzten Zustand bevorzugt bündig mit dem Schaufelfuß 4 abschließt oder geringfügig von der Oberfläche des Schaufelfußes vorsteht.

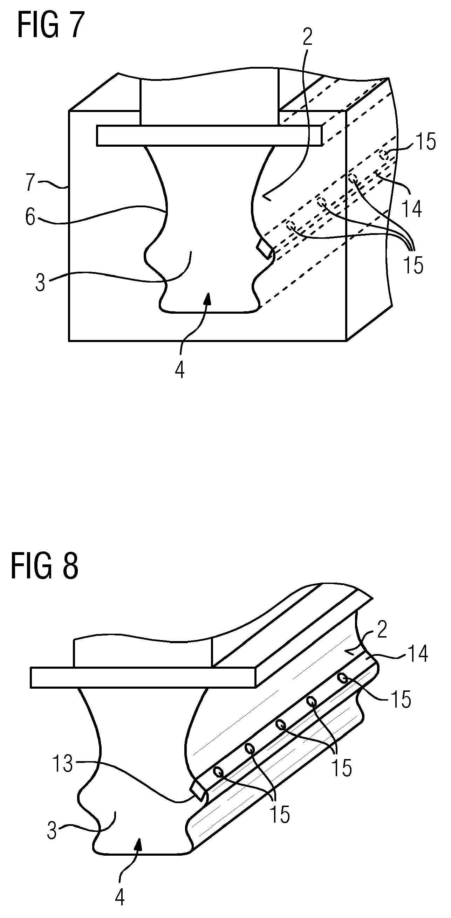

In einem weiteren Schritt wird gemäß Figur 6 analog zu Figur 4 die neue Eigenfrequenz der Laufschaufel 1 mit der daran gehaltenen Platte 14 ermittelt. Liegt diese nicht innerhalb des akzeptablen Referenzbereiches, so werden die in den Figuren 6 und 7 dargestellten Schritte mit unterschiedliche Lochmuster aufweisenden Platten 14 so oft wiederholt, bis sich eine gewünschte Eigenfrequenz einstellt. Ist dies der Fall, so wird die diejenige Platte 14, mit der die gewünschte Eigenfrequenz erzielt wurde, innerhalb der Vertiefung 13 an dem Schaufelfuß 4 befestigt, beispielsweise mittels Löten oder dergleichen, so dass sich die in Figur 8 dargestellte Anordnung ergibt. Die Löcher 15 definieren nun Aussparungen analog zu den in Figur 5 dargestellten Aussparungen 9 und bilden während des bestimmungsgemäßen Einsatzes der Laufschaufel 1 in einer Strömungsmaschine Nichtkontaktstellen zwischen den Seitenflächen 2 des Schaufelfußes 4 und einer Schaufelfußaufnahme der Strömungsmaschine, die zu einer analogen Eigenfrequenz der Laufschaufel 1 führen, die außerhalb des Resonanzbereiches liegt.

Es sollte klar sein, dass die Form, die Abmessungen ebenso wie die Anzahl der Vertiefungen 13 und Platten 14 ebenso wie die Form, die Abmessungen, die Positionen und die Anzahl der in der Platte 14 vorgesehenen Löcher 15 variieren können. Ferner kann die Vertiefung 13 auch bereits während der Herstellung der Laufschaufel 1 vorgesehen werden. In diesem Fall wird die erste Erfassung der Ist-Eigenfrequenz mit einer in die Vertiefung 13 eingesetzten Referenzplatte ohne Löcher 15 durchgeführt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Optimierung eines Designs einer Laufschaufel (1), die einen Schaufelfuß (4) und ein Schaufelblatt (5) aufweist, einer Strömungsmaschine, bei dem eine Ist-Eigenfrequenz der Laufschaufel (1) erfasst, die erfasste Ist-Eigenfrequenz mit einem Referenzwert oder Referenzbereich verglichen und, wenn eine die bestimmungsgemäße Verwendung der Laufschaufel (1) beeinträchtigende Abweichung oder Übereinstimmung zwischen der Ist-Eigenfrequenz und dem Referenzwert oder Referenzbereich festgestellt wird, eine bauliche Veränderung an der Laufschaufel (1) zur Änderung deren Eigenfrequenz vorgenommen wird, **dadurch gekennzeichnet, dass** als bauliche Veränderung zumindest eine Aussparung (9; 15) an einer vorbestimmten Position an zumindest einer Seitenfläche (2) des Laufschaufelfußes (4) ausgebildet wird.

2. Verfahren nach Anspruch 1,
**dadurch gekennzeichnet, dass**
die Laufschaufel (1) zur Erfassung der Ist-Eigenfrequenz mit ihrem Schaufelfuß (4) in eine Schaufelfußaufnahme (6) einer Erregungsvorrichtung (7) eines Schwingungsmessstandes (8) eingefügt wird, so dass sich Oberflächen des Schaufelfußes (4) und der Schaufelfußaufnahme (6) kontaktieren, eine Schwingung in der Laufschaufel (1) erregt und die angeregte Schwingung der Laufschaufel (1) gemessen wird.

3. Verfahren nach Anspruch 2,
**dadurch gekennzeichnet, dass**
die vorbestimmte Position der zumindest einen Aussparung (9; 15) bestimmt wird, indem eine Platte (10; 14) mit zumindest einem Loch (11; 15), insbesondere zumindest einem kreisförmigen Loch, bevorzugt einem Lochmuster, zwischen einer Seitenfläche (2) des Schaufelfußes (4) und der Schaufelfußaufnahme (6) der Erregungsvorrichtung (7) des Schwingungsmessstandes (8) angeordnet, die Eigenfrequenz der Laufschaufel (1) erneut erfasst und mit dem Referenzwert oder Referenzbereich verglichen wird.

4. Verfahren nach Anspruch 3,
**dadurch gekennzeichnet, dass**
die Platte (10) eine dünne Platte, insbesondere aus Metall, bevorzugt mit einer Dicke zwischen 0,1 und 2 mm, ist, die lösbar, insbesondere mittels Kleben, auf der Seitenfläche (2) des Schaufelfußes (4) befestigt wird.

5. Verfahren nach Anspruch 4,
**dadurch gekennzeichnet, dass**
die dünne Platte (10) so lange an unterschiedlichen Positionen zwischen der Seitenfläche (2) des Laufschaufelfußes (4) und der Schaufelfußaufnahme (6) angeordnet oder durch andere dünne Platten (10) mit unterschiedlichen Lochanordnungen ausgetauscht wird, bis keine die bestimmungsgemäße Verwendung der Laufschaufel (1) beeinträchtigende Abweichung oder Übereinstimmung zwischen der zuletzt erfassten Eigenfrequenz und dem Referenzwert oder Referenzbereich mehr festgestellt wird, und sodann die zumindest eine Aussparung (9) an der Position des zumindest einen Lochs (11) ausgebildet wird.

6. Verfahren nach Anspruch 5,
**dadurch gekennzeichnet, dass**
die zumindest eine Aussparung (9) durch Entfernen einer geringen Menge von Schaufelmaterial, insbesondere durch Erodieren, Bohren, Fräsen, Schleifen, "Smooth Blending" und/oder anderen Verfahren zur Materialabtragung, derart ausgebildet wird, dass bei einer bestimmungsgemäßen Verwendung der Laufschaufel (1) ein Kontakt zwischen dem Schaufelfuß (4) und einer Schaufelfußaufnahme gerade verhindert wird.

7. Verfahren nach Anspruch 3,
**dadurch gekennzeichnet, dass**
die Platte (14) derart in eine an der Seitenfläche (2) des Schaufelfußes (4) vorgesehenen Vertiefung (13), insbesondere in Form einer Nut, eingelegt wird, dass die Platte (14) mit der Seitenfläche (2) des Schaufelfußes (4) bündig abschließt.

8. Verfahren nach Anspruch 7,
**dadurch gekennzeichnet, dass**
die Vertiefung (13) während der Herstellung der Laufschaufel (1) ausgebildet wird, wobei nach der Herstellung der Laufschaufel (1) deren Ist-Eigenfrequenz zunächst bei einer in die Vertiefung (13) eingefügten lochfreien Referenzplatte erfasst wird, oder die Vertiefung (13) erst dann in die Seitenfläche (2) des Schaufelfußes (4) eingebracht wird, wenn die Abweichung oder Übereinstimmung zwischen der Ist-Eigenfrequenz und dem Referenzwert oder Referenzbereich festgestellt wird.

9. Verfahren nach Anspruch 7 oder 8,
**dadurch gekennzeichnet, dass**
so lange Platten (14) mit unterschiedlichen Lochanordnungen in die Vertiefung (13) des Schaufelfußes (4) eingefügt werden, bis keine die bestimmungsgemäße Verwendung der Laufschaufel (1) beeinträchtigende Abweichung oder Übereinstimmung zwischen der zuletzt erfassten Eigenfrequenz und dem Referenzwert oder Referenzbereich mehr festgestellt wird, und die Platte (14) sodann unverändert und dauerhaft als Bestandteil der Laufschaufel (1) in deren Vertiefung (13) verbleibt, so dass das zumindest eine Loch (15) der Platte (7) die zumindest eine Aussparung ausbildet.

10. Laufschaufel (1) für eine Strömungsmaschine, die einen Schaufelfuß (4) und ein Schaufelblatt (5) aufweist,
**dadurch gekennzeichnet, dass**
zumindest eine Aussparung (9; 15) an zumindest einer derjenigen Seitenfläche (2) des Laufschaufelfußes (4) ausgebildet ist, an der die Laufschaufel bei bestimmungsgemäßer Benutzung in der Strömungsmaschine während des Betriebes unter Fliehkraft an den Tragflanken der Schaufelfußaufnahme des Rotors anliegt.

11. Laufschaufel (1) nach Anspruch 10,
**dadurch gekennzeichnet, dass**
die zumindest eine Aussparung (9; 15) in Form eines Bohrlochs mit kreisrundem Querschnitt ausgebildet ist.

12. Laufschaufel (1) nach Anspruch 10 oder 11,
**dadurch gekennzeichnet, dass**
an der Oberfläche des Schaufelfußes (4) eine Vertiefung (13), insbesondere eine längliche Nut, ausgebildet ist, in der eine korrespondierende Platte (14) befestigt ist, wobei die Platte (14) mit der Oberfläche des Schaufelfußes (4) im Wesentlichen bündig abschließt und die zumindest eine Aussparung (15), insbesondere in Form einer Sackbohrung oder einer Durchgangsbohrung, in der Platte (14) ausgebildet ist.

13. Laufschaufel (1) nach Anspruch 12,
**dadurch gekennzeichnet, dass**
sich die Vertiefung (13) über etwa 90% einer Seitenfläche (2) des Schaufelfußes (4) oder über die komplette Länge der Seitenfläche (2) und in die beiden Stirnflächen (3) des Schaufelfußes (4) hinein erstreckt.
